# EUROPEAN PATENT APPLICATION

(11) **EP 4 786 401 A1**
(43) Date of publication of application: **05.08.2026**
(21) Application number: 25382057.5
(22) Date of filing: 30.01.2025
(51) Int. Cl.: B66D 5/14, B66D 5/30

(54) **ELEVATOR BRAKE**

(71) Applicant: Otis Elevator Company, Farmington, Connecticut 06032 (US)
(72) Inventor: Illan, Juan Antonio, 28919 Leganes, Madrid (ES)
(74) Representative: Schmitt-Nilson Schraud Waibel Wohlfrom Patentanwälte Partnerschaft mbB

(57) **Abstract**

An elevator brake (20) for braking rotation of a shaft (12) in an elevator drive system (5), wherein the shaft (12) extends in an axial direction (A) and is rotatable around an axis of rotation (Z), comprises: a brake disc (24) mounted to the shaft (12) such as to rotate concurrently with the shaft (12); at least one movable plunger (30) that is linearly movable along the axial direction (A) between an engaged position, in which it engages the elevator brake (20), and an released position, in which it releases the elevator brake (20); an actuator that is configured for selectively moving the at least one movable plunger (30) between the engaged position and the released position; and a blocking mechanism (32, 36; 46; 46a, 46b) that is configured for preventing the at least one movable plunger (30) from moving from the engaged position into the released position if the at least one movable plunger (30) has traveled more than a predefined distance from the released position into the engaged position.

## Description

The invention relates to an elevator brake that is to be employed for braking and stopping movement of an elevator car in an elevator system. The invention further relates to an elevator drive system and to an elevator system, each comprising an elevator brake according to an exemplary embodiment of the invention.

An elevator system typically comprises at least one elevator car that is configured for moving along a hoistway between a plurality of landings, and a drive system that is configured for driving the elevator car.

The drive system comprises at least one motor for moving the elevator car along the hoistway, and at least one elevator brake for braking and stopping the movement of the elevator car.

The at least one elevator brake may comprise a brake disc and at least one movable plunger that is movable into frictional engagement with the brake disc for selectively braking and stopping rotation of the brake disc.

The brake disc and/or the plunger may be provided with at least one brake lining for increasing the friction between the at least one movable plunger and the brake disc. When the elevator brake is operated, the at least one brake lining will gradually wear over time.

For a safe operation of the elevator brake, the wear of the brake lining and/or of the brake disc should be monitored in order to detect when it exceeds an acceptable limit. Elevator safety codes may therefore mandate monitoring wear of the brake lining and/or of the brake disc.

Consequently, it would be beneficial to provide an elevator brake that allows for reliably and automatically monitoring the wear of the brake lining and/or brake disc at low cost.

According to an exemplary embodiment of the invention, an elevator brake that is configured for braking rotation of a shaft in an elevator drive system, wherein the shaft extends in an axial direction and is rotatable around an axis of rotation, comprises: a brake disc mounted to the shaft such as to rotate concurrently with the shaft; at least one movable plunger that is linearly movable along the axial direction between an engaged position, in which it engages the elevator brake, and a released position, in which it releases the elevator brake; an actuator that is configured for selectively moving the at least one movable plunger between the engaged position and the released position; and a blocking mechanism that is configured for preventing the at least one movable plunger from moving from the engaged position into the released position if the at least one movable plunger has traveled more than a predefined distance from the released position into the engaged position.

The elevator brake may further comprise a sensor that is configured for detecting whether the at least one movable plunger is in the engaged position or in the released position. A signal provided by the sensor indicating that the at least one movable plunger is not in the released position may be employed for detecting a malfunction of the elevator system and for issuing a notification to service personnel indicating that the elevator brake needs maintenance and/or repair and/ or replacement.

In an elevator brake according to an exemplary embodiment of the invention, the travel distance of the at least one movable plunger increases as the brake lining and/or the brake disc becomes thinner due to wear. When the brake lining and/or the brake disc has worn down more than a predefined value, which is set in order to allow for a safe operation of the elevator brake, the at least one movable plunger will travel over more than the predefined distance when the elevator brake is engaged. In an elevator brake according to an exemplary embodiment of the invention, the at least one plunger is unable to return into the released position after the at least one movable plunger has traveled more than the predefined distance from the released position into the engaged position. Consequently, the elevator brake will remain in the engaged position and the sensor will detect that the brake cannot be released. As a result, the safety of the elevator system is ensured since the elevator cannot be moved after the brake lining and/or the brake disc has worn down beyond the predefined value.

As a result, an elevator brake according to an exemplary embodiment of the invention allows for safe operation of the elevator system.

In an elevator brake according to an exemplary embodiment of the invention, a sensor that is configured for detecting whether the elevator brake has been successfully released and that is mandatory according to many elevator safety codes can additionally be employed for detecting wear of the brake lining(s). In consequence, no additional sensor(s) need to be added to the elevator brake and the elevator brake may be manufactured at low costs.

In the following, a number of optional features of an elevator brake according to exemplary embodiments of the invention are set out. These features may be realized in particular embodiments, alone or in combination with any of the other features, unless explicitly stated otherwise.

The elevator brake may comprise at least one longitudinal support member extending parallel to the shaft and supporting the at least one movable plunger in a configuration that allows the at least one movable plunger to travel along the at least one longitudinal support member.

The at least one longitudinal support member may be provided with a first step or shoulder, and the at least one movable plunger may be provided with a complementary second step or shoulder that is engageable with the first step or shoulder for preventing the at least one movable plunger from moving from the engaged position into the released position after the at least one movable plunger has traveled more than the predefined distance from the released position into the engaged position.

The at least one longitudinal support member may comprise a rod, for example a cylindrical rod, extending in the axial direction. The at least one movable plunger may comprise an opening extending in the axial direction and the rod may extend through said opening. In such a configuration, the first step may be formed on an outer peripheral surface of the rod, and the second step may be formed on an inner circumferential surface of the opening formed in the at least one movable plunger.

A configuration comprising two complementary steps or shoulders that are configured for engaging with each other provides a blocking mechanism that may be manufactured at low costs and that allows for reliably preventing the at least one movable plunger from moving from the engaged position into the released position after the at least one movable plunger has traveled more than the predefined distance from the released position into the engaged position.

The at least one longitudinal support member and the two complementary steps or shoulders may have rotational symmetry around the axial direction and they may be arranged coaxially with respect to each other.

For moving into a blocking position in which the second step or shoulder formed at the at least one movable plunger engages with the first step or shoulder formed at the at least one longitudinal support member, the at least one movable plunger may be configured for moving in a radial direction that is oriented perpendicularly to the axial direction.

The at least one movable plunger may be driven by gravity into the blocking position when the at least one movable plunger has traveled more than the predefined distance from the released position into the engaged position.

A movable plunger that is driven into the blocking position by gravity allows for a simple configuration of the elevator brake that does not need any additional components for driving the movable plunger.

An elevator brake according to an exemplary embodiment of the invention may further comprise at least one elastic element that is configured for urging the at least one movable plunger into the blocking position when the at least one movable plunger has traveled more than the predefined distance from the released position into the engaged position. The at least one elastic element may in particular be configured for urging the at least one movable plunger in the radial direction.

Adding such an elastic element to the blocking mechanism may increase the operational reliability of blocking mechanism.

In order to prevent the at least one movable plunger from moving from the engaged position into the released position after the at least one movable plunger has traveled more than the predefined distance into the engaged position, the elevator brake may comprise a blocking element that is movable between a blocking position and a released position. When arranged in the blocking position, the blocking element blocks movement of the at least one movable plunger from the engaged position into the released position. When arranged in the released position, the blocking element allows for movement of the at least one movable plunger from the engaged position into the released position.

For efficiently blocking the movement of the at least one movable plunger, the blocking element may be positioned between the at least one movable plunger and the actuator.

A blocking element support surface extending parallel to the axial direction may be formed on the least one movable plunger. The blocking element may be arranged on the blocking element support surface when the at least one movable plunger is arranged in the released position.

In order to prevent the at least one movable plunger from moving from the engaged position into the released position after the at least one movable plunger has traveled more than the predefined distance into the engaged position, the blocking element may be configured to move from the blocking element support surface into a gap that is formed between the at least one movable plunger and the actuator when the at least one movable plunger has traveled more than the predefined distance from the released position into the engaged position.

The blocking element may be driven by gravity into the gap. A blocking element that is driven by gravity allows for a simple configuration of the elevator brake that does not need any additional components.

Optionally, the elevator brake may comprise an elastic element that is configured for urging the blocking element into the blocking position when the at least one movable plunger has traveled more than the predefined distance from the released position into the engaged position. The elastic element may in particular be configured to urge the blocking element in the radial direction that is oriented perpendicularly to the axial direction.

Providing such an elastic element for urging the blocking element may increase the operational reliability of the blocking mechanism.

The blocking element may have a polygonal cross-section, in particular a rectangular or quadratic cross-section. Alternatively, the blocking element may have a round cross-section, such as a circular cross-section or an elliptical cross-section.

Exemplary embodiments of the invention further include an elevator drive system that comprises a rotatable shaft, a motor for rotating the shaft and an elevator brake according to an exemplary embodiment of the invention that is configured for braking rotation of the shaft.

Exemplary embodiments of the invention further include an elevator system comprising at least one elevator car that is movable in a hoistway between a plurality of landings and an elevator drive system according to an exemplary embodiment of the invention that is configured for moving the at least one elevator car along the hoistway.

The additional features, modifications, and effects described above in relation to an elevator brake according to exemplary embodiments of the invention apply analogously to such an elevator drive system and to such an elevator system, respectively.

In the following, exemplary embodiments of the invention are described in more detail with respect to the enclosed figures:
Figure 1 depicts a schematic view of an elevator system according to an exemplary embodiment of the invention.
Figure 2A depicts a schematic sectional view of an elevator brake according to an exemplary embodiment of the invention in an unblocked state.
Figure 2B depicts a schematic sectional view of the elevator brake depicted in Figure 2A in a blocked state.
Figure 3A depicts a sectional view of the elevator brake depicted in Figure 2A.
Figure 3B depicts a sectional view of the elevator brake depicted in Figure 2B.
Figure 4A depicts a schematic sectional view of an elevator brake according to another exemplary embodiment of the invention in an unblocked state.
Figure 4B depicts a schematic sectional view of the elevator brake depicted in Figure 4A in a blocked state.
Figure 5A depicts a sectional view of the elevator brake depicted in Figure 4A in a plane that is orientated perpendicularly to the axis of rotation.
Figure 5B depicts a sectional view of the elevator brake depicted in Figure 4B in a plane that is orientated perpendicularly to the axis of rotation.

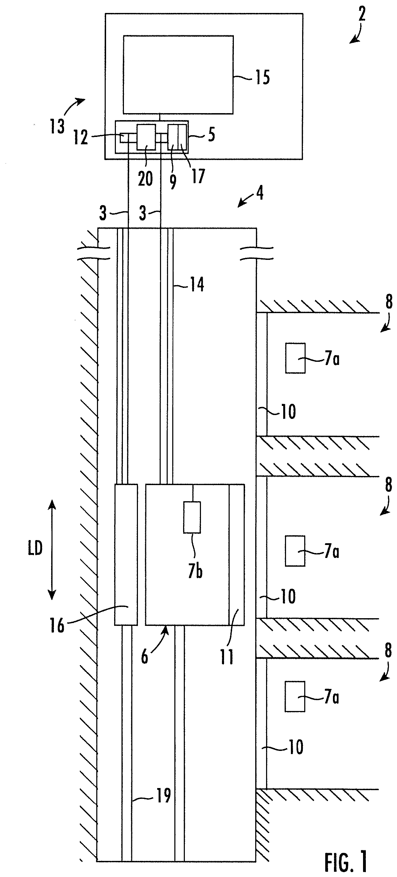

Figure 1 schematically depicts an elevator system 2 according to an exemplary embodiment of the invention.

The elevator system 2 comprises a hoistway 4 extending along a longitudinal direction LD between a plurality of landings 8 located on different floors. The elevator system 2 includes an elevator car 6 that is arranged in the hoistway 4 for being moved along the longitudinal direction LD between the plurality of landings 8. The elevator car 6 may in particular be movable along at least one elevator car guide rail 14 provided in the hoistway 4 and extending along the longitudinal direction LD.

The longitudinal direction LD may be oriented in a vertical direction, as it is depicted in Figure 1. In an alternative embodiment, which is not depicted in the figures, the longitudinal direction LD may be inclined with respect to the vertical direction.

Although only a single elevator car guide rail 14 is depicted in Figure 1, the elevator system 2 may comprise a plurality of elevator car guide rails 14 extending parallel to each other.

Although only a single elevator car 6 is depicted in Figure 1, exemplary embodiments of the invention may also include elevator systems 2 comprising a plurality of elevator cars 6 moving in one or more hoistways 4.

The elevator car 6 is movably suspended by means of a tension member 3. Although only a single tension member 3 is depicted in Figure 1, exemplary embodiments of the invention may also include elevator systems 2 comprising a plurality of tension members 3.

The at least one tension member 3, for example a rope or belt, is coupled to an elevator drive system 5. The elevator drive system 5 comprises a motor 9 for rotatably driving a shaft 12, and a drive 17 that harnesses and controls the electrical energy supplied to the motor 9. The elevator drive system 5 is configured for driving the at least one tension member 3, which is coupled to the shaft 12 via traction, in order to move the elevator car 6 in the hoistway 4 along the longitudinal direction LD between the plurality of landings 8.

The elevator drive system 5 is further provided with at least one elevator brake 20 for braking rotation of the shaft 12 in order to allow for stopping movement of the elevator car 6 and holding the elevator car 6 at a desired position in the hoistway 4.

Optionally, the elevator system 2 may comprise a counterweight 16. The counterweight 16 may be attached to the at least one tension member 3 opposite to the elevator car 6 and configured for moving concurrently and in opposite direction with respect to the elevator car 6. The counterweight 16 may move along at least one counterweight guide rail 19 provided in the hoistway 4 and extending along the longitudinal direction LD.

The at least one tension member 3 may be a rope, e.g. a steel cord, or a belt, in particular a coated steel belt. The at least one tension member 3 may be uncoated. Alternatively, the at least one tension member 3 may be coated with a coating, e.g. with a coating having the form of a polymer jacket. In a particular embodiment, the at least one tension member 3 may be a belt comprising a plurality of polymer coated steel cords (not shown). The elevator system 2 may have a traction drive including a traction sheave for driving the at least one tension member 3.

In the exemplary embodiment depicted in Figure 1, a 1:1 roping is employed for suspending the elevator car 6. The type of the roping is, however, not essential for the invention and different kinds of roping, e.g. a 2:1 roping or a 4:1 roping may be employed as well.

A landing door 10 is provided at each of the landings 8. The elevator car 6 is provided with a corresponding elevator car door 11 for allowing passengers to transfer between a landing 8 and the interior of the elevator car 6, when the elevator car 6 is positioned at the respective landing 8.

For moving the elevator car 6 along the hoistway 4 between the different landings 8, the elevator drive system 5 may be controlled by an elevator controller 15 of the elevator system 2.

The elevator system 2 may be a machine room-less elevator system 2. In an alternative embodiment, the elevator system 2 may comprise a machine room 13 housing the elevator drive system 5 and the elevator controller 15.

Input to the elevator controller 15 may be provided via landing control panels 7a provided on every landing 8, in particular in the vicinity of the landing doors 10, and/or via an elevator car control panel 7b provided inside the elevator car 6.

The landing control panels 7a may comprise elevator hall call buttons and/or destination call buttons. Destination call buttons allow passengers to enter their respective destinations before entering the elevator car 6. In case the landing control panels 7a are equipped with destination call buttons, no elevator car control panel 7b needs to be provided inside the elevator car 6 since the elevator system 2 is fully controlled by the commands input via the landing control panels 7a.

The landing control panels 7a and the elevator car control panel 7b may be coupled with the elevator controller 15 by means of electrical wiring not shown in Figure 1, in particular by an electric bus, or by wireless data connections.

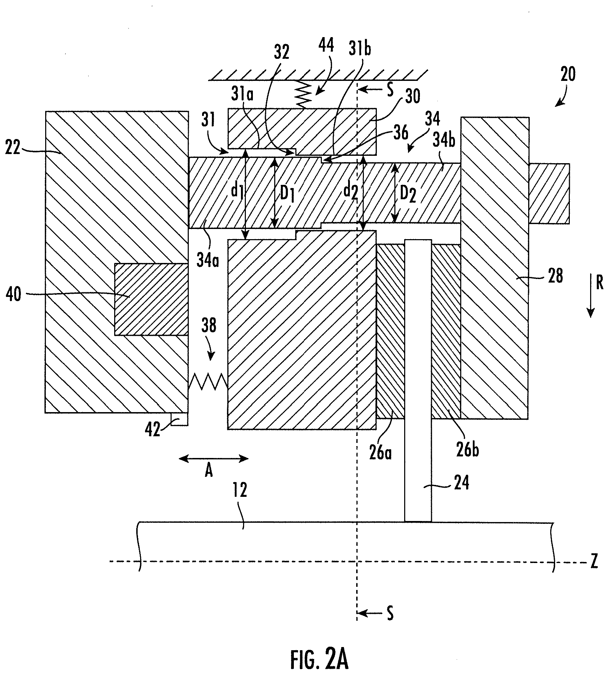

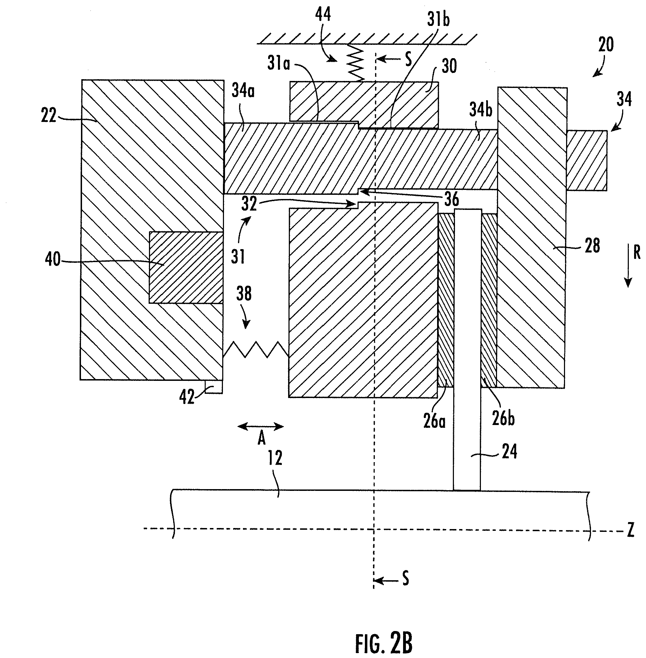

Figure 2A depicts a schematic sectional view of an elevator brake 20 according to an exemplary embodiment of the invention in an unblocked state. Figure 2B depicts a schematic sectional view of the elevator brake 20 depicted in Figure 2A in a blocked state.

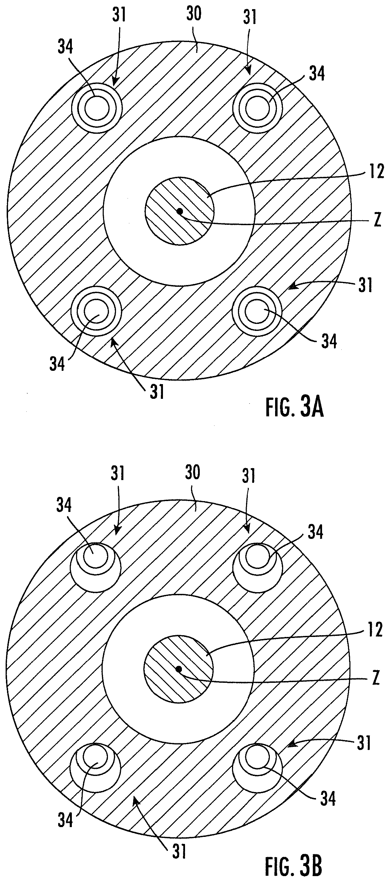

Figure 3A depicts a sectional view of the elevator brake 20 depicted in Figure 2A along sectional line S-S. Figure 3B depicts a sectional view of the elevator brake 20 depicted in Figure 2B along sectional line S-S.

In the exemplary orientation depicted in Figures 2A and 2B, the elevator brake 20 comprises from left to right a first stationary element 22, a movable plunger 30, a brake disc 24, and a second stationary element 28 that are arranged next to each other along an axial direction A.

The brake disc 24 is non-rotatably coupled to a shaft 12 that extends in the axial direction A along an axis of rotation Z. A brake lining 26a, 26b is provided on each side of the brake disc 24, respectively. Additionally or alternatively, brake linings that are not depicted in the figures may be provided on the surfaces of the movable plunger 30 and/or of the second stationary element 28 facing the brake disc 24.

A plurality of longitudinal support members 34 extends between the first and second stationary elements 22, 28 along the axial direction A parallel to the shaft 12. The longitudinal support members 34 are rigidly, i.e. non-movably, fixed to the first and second stationary elements 22, 28.

Figures 3A and 3B show that the exemplary embodiment of the elevator brake 20 depicted in Figures 2A to 3B comprises four longitudinal support members 34. When projected onto the sectional plane depicted in Figures 3A and 3B, the four longitudinal support members 34 are arranged in a rectangular, in particular in a quadratic, configuration. Only one of the longitudinal support members 34 is depicted in Figures 2A and 2B, respectively.

In additional exemplary embodiments that are not explicitly depicted in the figures, the elevator brake 20 may comprise more or fewer than four longitudinal support members 34.

Multiple openings 31 extending in the axial direction A are formed in the movable plunger 30. The movable plunger 30 comprises in particular at least as many openings 31 as there are longitudinal support members 34. Each longitudinal support member 34 extends through a corresponding opening 31 in a configuration that allows the movable plunger 30 to move along the longitudinal support members 34 in the axial direction A.

At least one actuator spring 38 is arranged between the first stationary element 22 and the movable plunger 30. The at least one actuator spring 38 is configured for urging the movable plunger 30 away from the first stationary element 22 towards the brake disc 24 into a configuration in which the brake disc 24 is sandwiched between the first and second stationary elements 22, 28. In such a configuration, a first brake lining 26a provided on the brake disc 24 engages with a corresponding braking surface of the movable plunger 30 and a second brake lining 26b provided on the brake disc 24 engages with a corresponding braking surface of the second stationary element 28 for braking rotation of the brake disc 24 and, consequently, of the shaft 12.

In order to allow for selectively releasing the elevator brake 20, at least one solenoid 40 facing the movable plunger 30 is provided in the first stationary element 22.

When the at least one solenoid 40 is activated by flowing an electric current through the at least one solenoid 40, the at least one solenoid 40 generates a magnetic force acting on the movable plunger 30. The magnetic force generated by the at least one solenoid 40 opposes the elastic force exerted by the at least one actuator spring 38 and pulls the movable plunger 30 in the axial direction A away from the brake disc 24 towards the first stationary element 22. Consequently, the movable plunger 30 is disengaged from the first brake lining 26a and the elevator brake 20 is released.

The at least one actuator spring 38 and the at least one solenoid 40 constitute an actuator of the elevator brake 20. Although only a single actuator spring 38 and a single solenoid 40 are depicted in the figures, elevator brakes 20 according to exemplary embodiments of the invention may optionally comprise a plurality of actuator springs 38 and/or a plurality of solenoids 40.

The elevator brake 20 is provided with at least one sensor 42 that is configured for detecting whether the movable plunger 30 is arranged in the released position.

When the elevator brake 20 is operated, the at least one brake lining 26a, 26b will typically wear over time. As a result, the at least one brake lining 26a, 26b will become thinner. Consequently, the movable plunger 30 will travel over a larger distance along the longitudinal support members 34 until its movement is stopped due to engagement of the movable plunger 30 with the first brake lining 26a provided on the side of the brake disc 24 facing the movable plunger 30.

The outer circumferential periphery of each longitudinal support member 34 is provided with a first step or shoulder 36. As a result, each longitudinal support member 34 comprises a first section 34a extending between the first stationary element 22 and the first step or shoulder 36 and a second section 34b extending between the shoulder 36 and the second stationary element 28.

The first section 34a of each longitudinal support member 34 has a first diameter D1 and the second first section 34b has a second diameter D2 that is smaller than the first diameter D1 (D2 < D1).

A complementary second step or shoulder 32 is formed on the inner circumferential surface of each opening 31 extending through the movable plunger 30. As a result, each opening 31 extending through the movable plunger 30 comprises a first section 31a extending between the side of the movable plunger 30 facing the first stationary element 22 and the second step or shoulder 36 and a second section 31b extending between the second step or shoulder 36 and side of the movable plunger 30 facing the second stationary element 28.

The first section 31a of each opening 31 has a first diameter d1 and the second first section 31b of each opening 31 has a second diameter d2 that is smaller than the first diameter d1 (d2 < d1).

The at least one longitudinal support members 34, the openings 31 and the two complementary steps or shoulders 32, 36 may have rotational symmetry around the axial direction A. They may in particular be arranged coaxially with respect to each other, as it is depicted in Figures 3A and 3B.

When, due to wear of the brake linings 26a, 26b, the movable plunger 30 has traveled along the axial direction A over more than a predefined distance that is defined by the positions of the first and second steps or shoulders 32, 36, the second steps or shoulders 32 formed in the openings 31 of the movable plunger 30 pass the first steps or shoulders 36 that are formed on the outer periphery of the longitudinal support members 34. Consequently, the movable plunger 30 is capable to move or drop in a radial direction R that is oriented perpendicularly to the axial direction A towards the longitudinal support member 34, as it is depicted in Figures 2B and 3B.

As depicted in Figure 2B, the second step or shoulders 32 formed on the movable plunger 30 engage with the first step or shoulders 36 formed on the outer periphery of the longitudinal support members 34. The engagement of the first and second steps or shoulders 32, 36 prevents the movable plunger 30 from moving back towards the first stationary element 22 even when the solenoid 40 is activated for releasing the elevator brake 20.

In consequence, the elevator brake 20 cannot be released by activating the solenoid 40 and remains stuck in the engaged position depicted in Figure 2B.

The sensor 42 may detect that the movable plunger 30 is not arranged in the released position. A signal provided by the sensor 42 allows for issuing a notification indicating that the elevator brake 20 needs maintenance and/or repair.

Elevator safety codes may require that any elevator system 2 comprises a sensor 42 that is configured for detecting whether the elevator brake 20 has been successfully released. In an elevator brake 20 according to an exemplary embodiment of the invention, such a mandatory sensor 42 is additionally employed for detecting wear of the brake linings 26a, 26b. In consequence, no additional sensor needs to be added to the elevator brake 20.

in an elevator brake 20 according to an exemplary embodiment of the invention, the movable plunger 30 may be configured to move in the radial direction R towards the longitudinal support member 34 due to its own weight, i.e. driven by gravity.

Alternatively or additionally, the elevator brake 20 may be equipped with at least one additional elastic element 44, such as a spring, that is configured for urging the movable plunger 30 in the radial direction R towards the longitudinal support member 34 when the movable plunger 30 has traveled more than the predefined distance along the axial direction A.

Adding such an elastic element 44 may increase the operational reliability of the blocking mechanism.

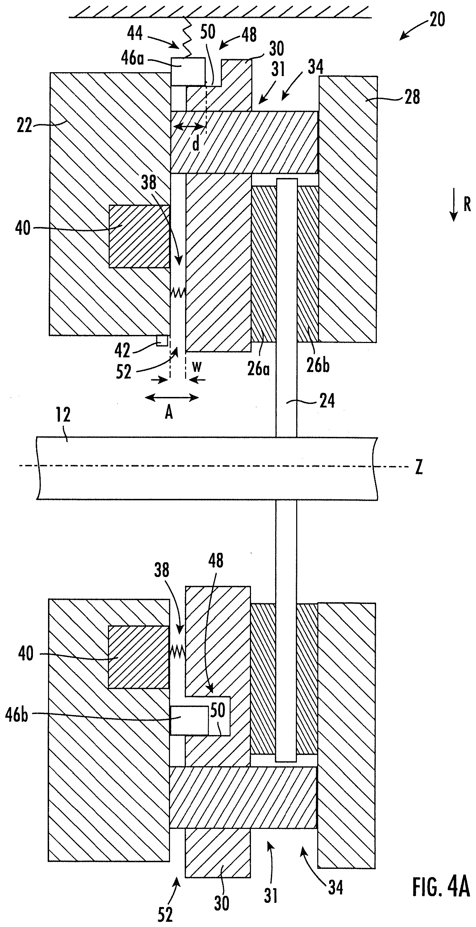

A further embodiment of an elevator brake 20 according to an exemplary embodiment of the invention is depicted in Figures 4A to 5B .

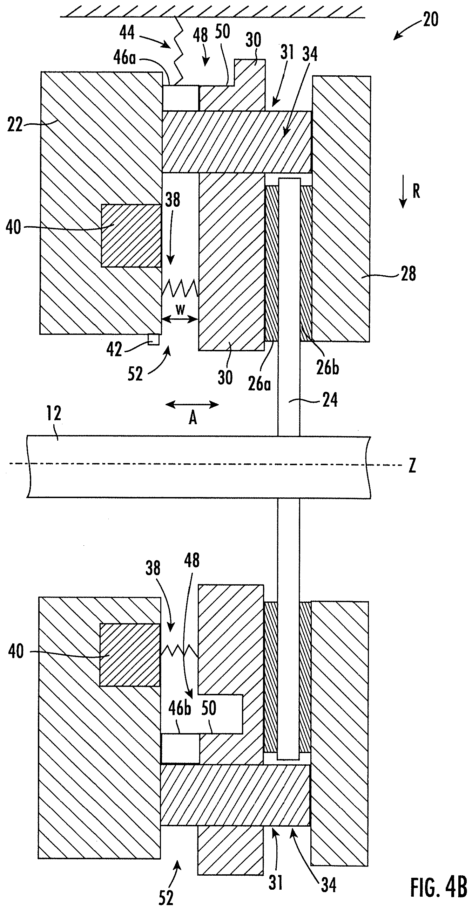

Figure 4A depicts a schematic sectional view of the elevator brake 20 in an unblocked state. Figure 4B depicts a schematic sectional view of the elevator brake 20 depicted in Figure 4A in a blocked state.

Similar to the embodiment depicted in Figures 2A and 2B, the elevator brake depicted in Figures 4A and 4B comprises a first stationary element 22, a movable plunger 30, a brake disc 24, and a second stationary element 28 that are arranged next to each other along the axial direction A.

The brake disc 24 is non-rotatably coupled to a shaft 12 that extends in the axial direction A along an axis of rotation Z. A brake lining 26a, 26b is provided on each side of the brake disc 24, respectively.

Additionally or alternatively, brake linings that are not depicted in the figures may be provided on the surfaces of the movable plunger 30 and/or of the second stationary element 28 facing the brake disc 24.

A plurality of longitudinal support members 34 extend between the first and second stationary elements 22, 28 parallel to the shaft 12. The longitudinal support members 34 are rigidly, i.e. non-movably, fixed to the first and second stationary elements 22, 28, respectively.

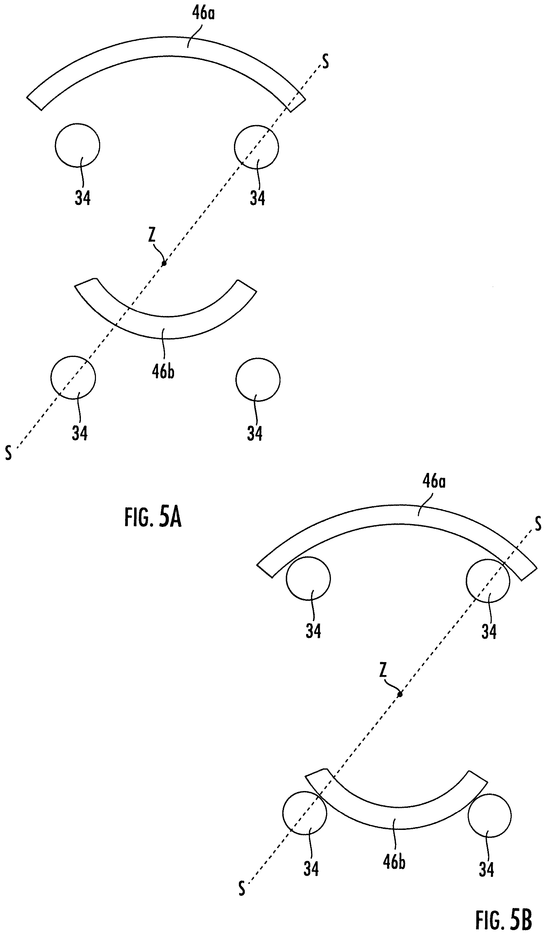

Figure 5A depicts a sectional view of the elevator brake 20 depicted in Figure 4A, and Figure 5B depicts a sectional view of the elevator brake 20 depicted in Figure 4B.

The plane of view depicted in Figures 5A and 5B is orientated perpendicularly to the axis of rotation Z depicted in Figures 4A and 4B. The dashed lines S-S depicted in Figures 5A and 5B illustrate the orientation of the sectional plane of view depicted in Figures 4A and 4B. For clarity of illustration, only the longitudinal support members 34 and the blocking elements 46a, 46b are depicted in Figures 5A and 5B.

Figures 5A and 5B show that the exemplary elevator brake 20 comprises four longitudinal support members 34 and two blocking elements 46a, 46b. When projected onto the sectional plane depicted in Figures 5A and 5B, the four longitudinal support members 34 are arranged in a rectangular, in particular in a quadratic, configuration. Only two of the longitudinal support members 34 are visible in Figures 4A and 4B, respectively.

In further exemplary embodiments that are not explicitly depicted in the figures, the elevator brake 20 may comprise more or fewer than four longitudinal support members 34 and more or fewer than two blocking elements 46a, 46b.

Referring again to Figures 4A and 4B, multiple openings 31 extending in the axial direction A are formed in the movable plunger 30. The movable plunger 30 comprises in particular at least as many openings 31 as there are longitudinal support members 34. Each longitudinal support member 34 extends through a corresponding opening 31 in a configuration that allows the movable plunger 30 to move along the longitudinal support member 34 in the axial direction A.

At least one actuator spring 38 is arranged between the first stationary element 22 and the movable plunger 30. Two actuator springs 38 are depicted in Figures 4A and 4B, respectively. The at least one actuator spring 38 is configured for urging the movable plunger 30 away from the first stationary element 22 towards the second stationary element 28 into engagement with the brake disc 24.

Consequently, the brake disc 24 is sandwiched between the first and second stationary elements 22, 28 with a first brake lining 26a engaging with a corresponding braking surface of the movable plunger 30 and a second brake lining 26b engaging with a corresponding braking surface of the second stationary element 28 for braking rotation of the brake disc 24 and, consequently, of the shaft 12.

In order to allow for selectively releasing the elevator brake 20, at least one solenoid 40 facing the movable plunger 30 is provided in the first stationary element 22. Two solenoids 40 are depicted in Figures 4A and 4B, respectively. The elevator brake 20 may comprise more than two solenoids 40. The elevator brake 20 may, for example, comprise as many solenoids 40 as there are longitudinal support members 34.

When the at least one solenoid 40 is activated by flowing an electric current through the solenoid 40, the at least one solenoid 40 generates a magnetic force acting on the movable plunger 30. The magnetic force generated by the at least one solenoid 40 opposes the elastic force exerted by the at least one actuator spring 38 and pulls the movable plunger 30 in the axial direction A away from the brake disc 24 towards the first stationary element 22. Consequently, the movable plunger 30 is disengaged from the first brake lining 26a and the elevator brake 20 is released.

The elevator brake 20 is provided with at least one sensor 42 that is configured for detecting whether the movable plunger 30 is arranged in a released position adjacent to the first stationary element 22.

In the embodiment depicted in Figures 4A and 4B, stepped structures 48 are formed on or in the movable plunger 30. A first stepped structure 48 that is depicted in the upper half of Figures 4A and 4B is formed in the outer periphery of the movable plunger 30. A second stepped structure 48 that is depicted in the lower half of Figures 4A and 4B is formed in an inner portion of the movable plunger 30.

Each of the stepped structures 48 includes a blocking element support surface 50 extending parallel to the axial direction A.

A blocking element 46a, 46b is arranged in each of said blocking element support surfaces 50, respectively.

Each of the blocking elements 46a, 46b has an extension d along the axial direction A. As long as the brake linings 26a, 26b are not worn down beyond a predefined limit, the extension d of the blocking elements 46a, 46b along the axial direction A prevents the blocking elements 46a, 46b from dropping from the respective blocking element support surface 50 into a gap 52 that is formed between the first stationary element 22 and the movable plunger 30 when the movable plunger 30 is moved into the engaged position. (See Figures 4A and 5A.)

In case, however, the brake linings 26a, 26b are worn down beyond the predefined limit, as it is depicted in Figure 4B, the movable plunger 30 will move more than a predefined distance along the axial direction A before its motion is stopped due to engagement with the brake disc 24.

As a result, the width w of the gap 52 formed between the first stationary element 22 and the movable plunger 30 will increase beyond the extension d of the blocking elements 46a, 46b along the axial direction A and the blocking elements 46a, 46b will drop into the gap 52 formed between the first stationary element 22 and the movable plunger 30, as it is depicted in Figures 4B and 5B.

When arranged in the gap 52 between the first stationary element 22 and the movable plunger 30, the blocking elements 46a, 46b block the movable plunger 30 from moving back towards the first stationary element 22 even when the solenoid 40 is activated.

Similar to the embodiment depicted in Figures 2A to 3B, the sensor 42 may be configured for detecting that the movable plunger 30 did not move into the released position in order to allow for issuing a notification indicating that the elevator brake 20 needs maintenance and/or repair.

The blocking elements 46a, 46b may be configured to fall into the gap 52 due to its own weight, i.e. driven by gravity.

Alternatively or additionally, the elevator brake 20 may be equipped with at least one additional elastic element 44, such as a spring, which is configured for urging at least one of the blocking elements 46a, 46b in the radial direction R into the gap 52 when the movable plunger 30 has traveled more than the predefined distance along the axial direction A.

Providing such an additional elastic element 44 may increase the reliability of blocking the movable plunger 30 in the engaged position after the movable plunger 30 has traveled more than the predefined distance from the released position into the engaged position.

While the invention has been described with reference to exemplary embodiments, it will be understood by those skilled in the art that various changes may be made and equivalents may be substituted for elements thereof without departing from the scope of the invention. In addition, many modifications may be made to adopt a particular situation or material to the teachings of the invention without departing from the essential scope thereof. Therefore, the invention is not intended to be limited to the specific embodiments disclosed, but to encompass all embodiments within the scope of the appended claims.

### References

- 2: elevator system
- 3: tension member
- 4: hoistway
- 5: elevator drive system
- 6: elevator car
- 6a: roof of the elevator car
- 7a: landing control panel
- 7b: elevator car control panel
- 8: landing
- 9: motor
- 10: landing door
- 10a: landing door panel
- 11: elevator car door
- 12: shaft
- 13: machine room
- 14: elevator car guide rail
- 15: elevator controller
- 16: counterweight
- 17: drive
- 19: counterweight guide rail
- 20: elevator brake
- 22: first stationary element
- 24: brake disc
- 26a: first brake lining
- 26b: second brake lining
- 28: second stationary element
- 30: movable plunger
- 31: opening
- 31a: first section
- 31b: second section
- 32: second step or shoulder
- 34: longitudinal support member
- 34a: first section
- 34b: second section
- 36: first step or shoulder
- 38: actuator spring
- 40: solenoid
- 42: sensor
- 44: elastic element
- 46a, 46b: blocking element
- 48: stepped structure
- 50: support surface
- 52: gap

## Claims

1. Elevator brake (20) for braking rotation of a rotatable shaft (12) in an elevator drive system (5), the shaft (12) extending in an axial direction (A) and being rotatable around an axis of rotation (Z), the elevator brake (20) comprising:
a brake disc (24) mounted to the shaft (12) such as to rotate concurrently with the shaft (12);
at least one movable plunger (30) that is linearly movable along the axial direction (A) between an engaged position, in which it engages the elevator brake (20), and a released position, in which it releases the elevator brake (20);
an actuator that is configured for selectively moving the at least one movable plunger (30) between the engaged position and the released position; and
a blocking mechanism (32, 36; 46a, 46b) that is configured for preventing the at least one movable plunger (30) from moving from the engaged position into the released position if the at least one movable plunger (30) has traveled more than a predefined distance from the released position into the engaged position.

2. Elevator brake (20) according to claim 1, further comprising at least one longitudinal support member (34) that extends parallel to the shaft (12) along the axial direction (A) and that supports the at least one movable plunger (30) in a configuration that allows the at least one movable plunger (30) to travel along the at least one longitudinal support member (34).

3. Elevator brake (20) according to claim 2, wherein the at least one longitudinal support member (34) is provided with a first step or shoulder (36), and wherein the at least one movable plunger (30) is provided with a second step or shoulder (32) that is engagable with the first step or shoulder (36) for preventing the at least one movable plunger (30) from moving from the engaged position into the released position after the at least one movable plunger (30) has traveled more than the predefined distance from the released position into the engaged position.

4. Elevator brake (20) according to claim 3,
wherein the at least one longitudinal support member (34) comprises a rod, in particular a cylindrical rod, extending in the axial direction (A);
wherein the at least one movable plunger (30) comprises an opening (31) extending in the axial direction (A) with the rod extending through the opening;
wherein the first step or shoulder (36) is formed on an outer peripheral surface of the rod; and
wherein the second step or shoulder (32) is formed on an inner circumferential surface of the opening (31).

5. Elevator brake (20) according to claim 3 or 4, wherein the at least one movable plunger (30) is configured to be driven by gravity into a position in which the second step or shoulder (32) provided at the at least one movable plunger (30) engages with the first step or shoulder (36) provided at the at least one longitudinal support member (34) when the at least one movable plunger (30) has traveled more than the predefined distance from the released position into the engaged position.

6. Elevator brake (20) according to any of claims 3 to 5,
further comprising at least one elastic element (44) that is configured for urging the at least one movable plunger (30) into a position in which the second step or shoulder (32) provided at the at least one movable plunger (30) engages with the first step or shoulder (36) provided at the at least one longitudinal support member (34) when the at least one movable plunger (30) has traveled more than the predefined distance from the released position into the engaged position;
wherein the at least one elastic element (44) is in particular configured for urging the at least one movable plunger (30) in a radial direction (R) that is oriented perpendicularly to the axial direction (A)

7. Elevator brake (20) according to any of the preceding claims, further comprising at least one blocking element (46a, 46b) that is movable between
a blocking position, in which it blocks movement of the at least one movable plunger (30) from the engaged position into the released position; and
a released position, in which it allows movement of the at least one movable plunger (30) from the engaged position into the released position.

8. Elevator brake (20) according to claim 7, wherein the at least one blocking element (46a, 46b) is arranged between the at least one movable plunger (30) and the actuator.

9. Elevator brake (20) according to claim 8, wherein the at least one blocking element (46a, 46b) is driven by gravity into the blocking position after the at least one movable plunger (30) has traveled more than the predefined distance from the released position into the engaged position.

10. Elevator brake (20) according to any of claims 7 to 9,
further comprising at least one elastic element (44) that is configured for urging at least one blocking element (46a) into the blocking position when the at least one movable plunger (30) has traveled more than the predefined distance from the released position into the engaged position;
wherein the at least one elastic element (44) is in particular configured for urging the at least one movable plunger (30) in a radial direction (R) that is oriented perpendicularly to the axial direction (A).

11. Elevator brake (20) according to any of claims 7 to 10,
wherein the at least one movable plunger (30) is provided with a blocking element support surface (50) that extends parallel to the axial direction (A);
wherein the blocking element (46a, 46b) is arranged on the blocking element support surface (50) when the at least one movable plunger (30) is in the released position, and
wherein the blocking element (46a, 46b) is configured to move from the blocking element support surface (50) into a gap (52) that is formed between the at least one movable plunger (30) and the actuator when the at least one movable plunger (30) has traveled more than the predefined distance from the released position into the engaged position.

12. Elevator brake (20) according to any of the preceding claims, further comprising a least one sensor (42) that is configured for detecting whether the at least one movable plunger (30) is arranged in the released position.

13. Elevator brake (20) according to any of the preceding claims, wherein the actuator comprises:
at least one actuator spring (38) that is configured for applying a spring force to the at least one movable plunger (30) for urging the at least one movable plunger (30) towards the at least one brake disc (24) for engaging the elevator brake (20); and
at least one solenoid (40) that is configured for producing a counterforce directed against the spring forces applied by the actuator spring (38) such as to urge the at least one movable plunger (30) away from the at least one brake disc (24) for releasing the elevator brake (20).

14. Elevator drive system (5), comprising a rotatable shaft (12), a motor (9) for rotating the shaft (12) and an elevator brake (20) according to any of the preceding claims for braking rotation of the shaft (12).

15. Elevator system (2) comprising:
at least one elevator car (6) that is movable in a hoistway (4) between a plurality of landings (8); and
an elevator drive system (5) according to claim 14 that is configured for moving the at least one elevator car (6) along the hoistway (4).
